# EUROPEAN PATENT APPLICATION

(11) **EP 2 797 033 A1**
(43) Date of publication of application: **29.10.2014**
(21) Application number: 14165403.8
(22) Date of filing: 22.04.2014
(51) Int. Cl.: G06K 9/00, G06T 7/00

(54) **Method and apparatus for processing sparse disparity map, and method and apparatus for detecting object**

(30) Priority: 22.04.2013 CN 201310141351
(71) Applicant: Ricoh Company, Ltd., Tokyo 143-8555 (JP)
(72) Inventor: Liu, Dianchao, 100044 Beijing (CN); Liu, Yuan, 100044 Beijing (CN); Chen, Chao, 100044 Beijing (CN); Shi, Zhongchao, 100044 Beijing (CN); Lu, Yaojie, 100044 Beijing (CN)
(74) Representative: Schwabe - Sandmair - Marx

(57) **Abstract**

A method and an apparatus for processing a sparse disparity map, and a method and an apparatus for detecting an object are disclosed. The methods include obtaining the disparity map; determining, based on the characteristic of the object in a horizontal and vertical direction in the disparity map, distance limitation conditions and disparity difference limitation conditions to be satisfied by a set of a start point and an end point; determining the sets of the start point and the end point based on the limitation conditions, and filling empty disparity points between the start point and the end point in the horizontal and vertical directions based on the set of the start point and the end point, for each of rows in the horizontal and vertical direction in the disparity map.

## Description

### BACKGROUND OF THE INVENTION

### 1. Field of the Invention

The present invention relates to disparity map processing, and specifically, a method and an apparatus for processing a sparse disparity map, and a method and an apparatus for detecting an object.

### 2. Description of the Related Art

Many methods for detecting an object based on a disparity map, for example, methods for detecting a vehicle or a guardrail on a road are provided.

However, sometimes there is a possibility a disparity map with relatively sparse disparity points (hereafter called a "sparse disparity map") may be obtained, because of any factors such as performance limitations of a camera or characteristics of a scene itself. It is difficult to detect an object such as a vehicle from a sparse disparity map. Furthermore, in actuality, it is often necessary to perform a projection in a horizontal or vertical direction for an original disparity map to obtain a U-disparity map or a V-disparity map, and detect an object from the U-disparity map or the V-disparity map; however, the characteristic of the object in the U-disparity map or the V-disparity map becomes weak and it is difficult to detect the object, since some disparity points are blocked due to the projection of the U-disparity map or the V-disparity map or are sparsely spaced. For example, in the article "A Complete U-V-Disparity Study for Stereovision Based 3D Driving Environment Analysis" published in Proceedings of the Fifth International Conference on 3-D Digital Imaging and Modeling 2005, for which the authors of the article are Zhencheng Hu, Francisco Lamosa and Keiichi Uchimura, a method for positioning and divisionally detecting an object based on a plane characteristic of a U-V-disparity map is introduced.

In U.S. Patent US7561732 for which the inventors are Owechko and Yuri et al., of HRL LABORATORIES, LLC and the title of the invention is "Method and apparatus for three-dimensional shape estimation using constrained disparity propagation", a method and an apparatus for three-dimensional shape estimation using constrained disparity propagation are disclosed. In such method, disparities are estimated based on object characteristics and non-object characteristics, subsequent estimates of the disparities using the disparity constraints are performed until there is no change, and the three-dimensional shape of the object and the corresponding disparity map are estimated.

### SUMMARY OF THE INVENTION

It is one of objects of the present invention to provide a method and an apparatus for processing a sparse disparity map applicable to the object detection, and the method and an apparatus for detecting an object based on the sparse disparity map.

According to an aspect of the present invention, a method for processing a sparse disparity map based on a characteristic of a predetermined object to be detected, includes: obtaining the disparity map for detecting the predetermined object;
determining, based on the characteristic of the object in a horizontal direction in the disparity map, a distance limitation condition and a disparity difference limitation condition in the horizontal direction to be satisfied by a set of a start point and an end point for performing a filling; determining the set of the start point and the end point for performing the filling in the horizontal direction based on the distance limitation condition and the disparity difference limitation condition in the horizontal direction, and filling empty disparity points between the start point and the end point in the horizontal direction based on the set of the start point and the end point for performing the filling in the horizontal direction, for each of rows in the horizontal direction in the disparity map; determining, based on the characteristic of the object in a vertical direction in the disparity map, a distance limitation condition and a disparity difference limitation condition in the vertical direction to be satisfied by a set of a start point and an end point for performing a filling; and determining the set of the start point and the end point for performing the filling in the vertical direction based on the distance limitation condition and the disparity difference limitation condition in the vertical direction, and filling empty disparity points between the start point and the end point in the vertical direction based on the set of the start point and the end point for performing the filling in the vertical direction, for each of columns in the vertical direction in the disparity map.

According to another aspect of the present invention, a method for detecting an object based on a sparse disparity map, includes: obtaining the disparity map for detecting the predetermined object; determining, based on the characteristic of the object in a horizontal direction in the disparity map, a distance limitation condition and a disparity difference limitation condition in the horizontal direction to be satisfied by a set of a start point and an end point for performing a filling; determining the set of the start point and the end point for performing the filling in the horizontal direction based on the distance limitation condition and the disparity difference limitation condition in the horizontal direction, and filling empty disparity points between the start point and the end point in the horizontal direction based on the set of the start point and the end point for performing the filling in the horizontal direction, for each of rows in the horizontal direction in the disparity map; determining, based on the characteristic of the object in a vertical direction in the disparity map, a distance limitation condition and a disparity difference limitation condition in the vertical direction to be satisfied by a set of a start point and an end point for performing a filling; determining the set of the start point and the end point for performing the filling in the vertical direction based on the distance limitation condition and the disparity difference limitation condition in the vertical direction, and filling empty disparity points between the start point and the end point in the vertical direction based on the set of the start point and the end point for performing the filling in the vertical direction, for each of columns in the vertical direction in the disparity map; segmenting the disparity map after the filling process; and detecting the object in the segmented regions based on the characteristic of the object.

According to another aspect of the present invention, an apparatus for processing a sparse disparity map based on a characteristic of a predetermined object to be detected, includes: a disparity map obtainment unit configured to obtain the disparity map for detecting the predetermined object; a horizontal direction limitation condition determination unit configured to determine, based on the characteristic of the object in a horizontal direction in the disparity map, a distance limitation condition and a disparity difference limitation condition in the horizontal direction to be satisfied by a set of a start point and an end point for performing a filling; a horizontal direction filling unit configured to determine the set of the start point and the end point for performing the filling in the horizontal direction based on the distance limitation condition and the disparity difference limitation condition in the horizontal direction, and fill empty disparity points between the start point and the end point in the horizontal direction based on the set of the start point and the end point for performing the filling in the horizontal direction, for each of rows in the horizontal direction in the disparity map; a vertical direction limitation condition determination unit configured to determine, based on the characteristic of the object in a vertical direction in the disparity map, a distance limitation condition and a disparity difference limitation condition in the vertical direction to be satisfied by a set of a start point and an end point for performing a filling; and a vertical direction filling unit configured to determine the set of the start point and the end point for performing the filling in the vertical direction based on the distance limitation condition and the disparity difference limitation condition in the vertical direction, and fill empty disparity points between the start point and the end point in the vertical direction based on the set of the start point and the end point for performing the filling in the vertical direction, for each of columns in the vertical direction in the disparity map.

According to another aspect of the present invention, an apparatus for detecting an object based on a sparse disparity map, includes: a disparity map obtainment unit configured to obtain the disparity map for detecting the predetermined object; a horizontal direction limitation condition determination unit configured to determine, based on the characteristic of the object in a horizontal direction in the disparity map, a distance limitation condition and a disparity difference limitation condition in the horizontal direction to be satisfied by a set of a start point and an end point for performing a filling; a horizontal direction filling unit configured to determine the set of the start point and the end point for performing the filling in the horizontal direction based on the distance limitation condition and the disparity difference limitation condition in the horizontal direction, and fill empty disparity points between the start point and the end point in the horizontal direction based on the set of the start point and the end point for performing the filling in the horizontal direction, for each of rows in the horizontal direction in the disparity map; a vertical direction limitation condition determination unit configured to determine, based on the characteristic of the object in a vertical direction in the disparity map, a distance limitation condition and a disparity difference limitation condition in the vertical direction to be satisfied by a set of a start point and an end point for performing a filling; a vertical direction filling unit configured to determine the set of the start point and the end point for performing the filling in the vertical direction based on the distance limitation condition and the disparity difference limitation condition in the vertical direction, and fill empty disparity points between the start point and the end point in the vertical direction based on the set of the start point and the end point for performing the filling in the vertical direction, for each of columns in the vertical direction in the disparity map; a segmentation unit configured to segment the disparity map after the filling process; and an object detection unit configured to detect the object in the segmented regions based on the characteristic of the object.

According to the method and the apparatus for processing a sparse disparity map, and the method and the apparatus for detecting an object with such sparse disparity map processing process, distance limitation conditions and disparity difference limitation conditions in a horizontal direction and a vertical direction to be satisfied by a set of a start point and an end point for performing a filling are determined based on characteristics of the object in the horizontal direction and the vertical direction, disparity points are filled in the horizontal direction based on the determined limitation conditions in the horizontal direction, and disparity points are filled in the vertical direction based on the determined limitation conditions in the vertical direction; therefore, a disparity map in which the disparity points applicable to the object detection are filled can be obtained, accordingly the object detection can be performed directly based on the disparity map in which the disparity points are filled.

### BRIEF DESCRIPTION OF THE DRAWINGS

The embodiments are illustrated in the accompanying drawings, however the present invention is not limited by the embodiments. It should be noted that, in order to facilitate the understanding of the present invention, units illustrated in the drawings are not drawn in proportion. Furthermore, in some cases, a sign may be used for the same unit, corresponding units or similar units in duplicate in the accompanying drawings.
FIG. 1 is an overall flowchart of the method for processing a sparse disparity map according to an embodiment of the present invention;
FIG. 2 is a flowchart of a method for filling disparity points in a horizontal direction according to an embodiment of the present invention;
FIG. 3(a) is a schematic drawing representing an original disparity map, and FIG. 3(b) illustrates a schematic drawing representing a disparity map after the disparity point filling process in the horizontal direction, i.e., an x-connect process;
FIG. 4 is a flowchart of a method for filling disparity points in a vertical direction according to an embodiment of the present invention;
FIG. 5(a) is a schematic drawing representing an original disparity map, and FIG. 5(b) is a schematic drawing representing a disparity map after the disparity point filling process in the vertical direction, i.e., a y-connect process;
FIG. 6(a) illustrates the result of the x-connect process of the disparity map illustrated in FIG. 3(b), and FIG. 6(b) illustrates the result of the y-connect process of the disparity map illustrated in FIG. 6(a);
FIG. 7 is a flowchart of a method for detecting an object based on a sparse disparity map according to an embodiment of the present invention;

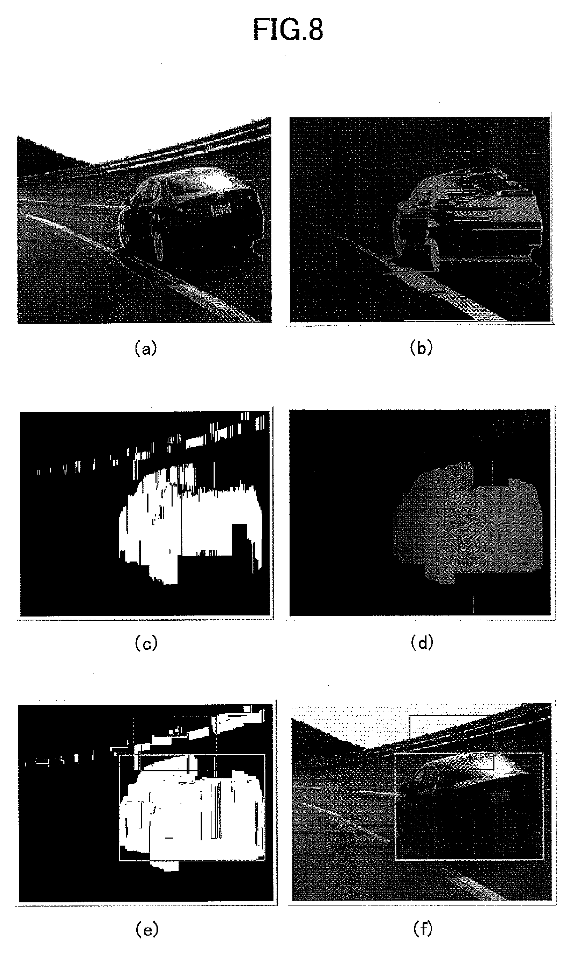

FIG. 8(a) illustrates an original grayscale image and the detected disparity points thereof, which are pale color points with a burr-shape, FIG. 8(b) illustrates a disparity map obtained by filling empty disparity points of the original disparity map in the horizontal direction, FIG. 8(c) illustrates a disparity map obtained by filling empty disparity points of the disparity map illustrated in FIG. 8(b) in the vertical direction, FIG. 8(d) illustrates a disparity map obtained by filling empty disparity points of the disparity map illustrated in FIG. 8(c) in the horizontal direction, FIG. 8(e) illustrates a disparity map obtained by filling empty disparity points of the disparity map illustrated in FIG. 8(d) in the vertical direction and performing an image region segmentation, and FIG. 8(f) illustrates the result of an object detection after the image region segmentation;
FIG. 9 is a block diagram illustrating an apparatus for processing a sparse disparity map 3000 according to an embodiment of the present invention;
FIG. 10 is a block diagram illustrating an apparatus for detecting an object based on a sparse disparity map 4000 according to an embodiment of the present invention; and
FIG. 11 is an overall hardware block diagram illustrating a sparse disparity map processing system/an object detection system 6000 according to the embodiment of the present invention.

### DETAILED DESCRIPTION OF THE PREFERRED EMBODIMENTS

In the following, embodiments of the present invention are described with reference to the accompanying drawings, so as to facilitate the understanding of the present invention. In order to avoid confusion with the gist of the present invention, the conventional technologies in the art will not be described in detail.

The embodiments of the present invention will be described in the following order:
1. Example of Method for Processing Sparse Disparity Map
   1.1. Example of Overall Flow of Method for Processing Sparse Disparity Map
   1.2. Example of Method for Filling Disparity Points in Horizontal Direction
   1.3. Example of Method for Filling Disparity Points in Vertical Direction
2. Method for Detecting Object Based On Sparse Disparity Map
3. Sparse Disparity Map Processing Apparatus
4. Object Detection Apparatus Based On Sparse Disparity Map
5. System Hardware Configuration
6. Summary

### <1. Example of Method for Processing Sparse Disparity Map>

### <1.1. Example of Overall Flow of Method for Processing Sparse Disparity Map>

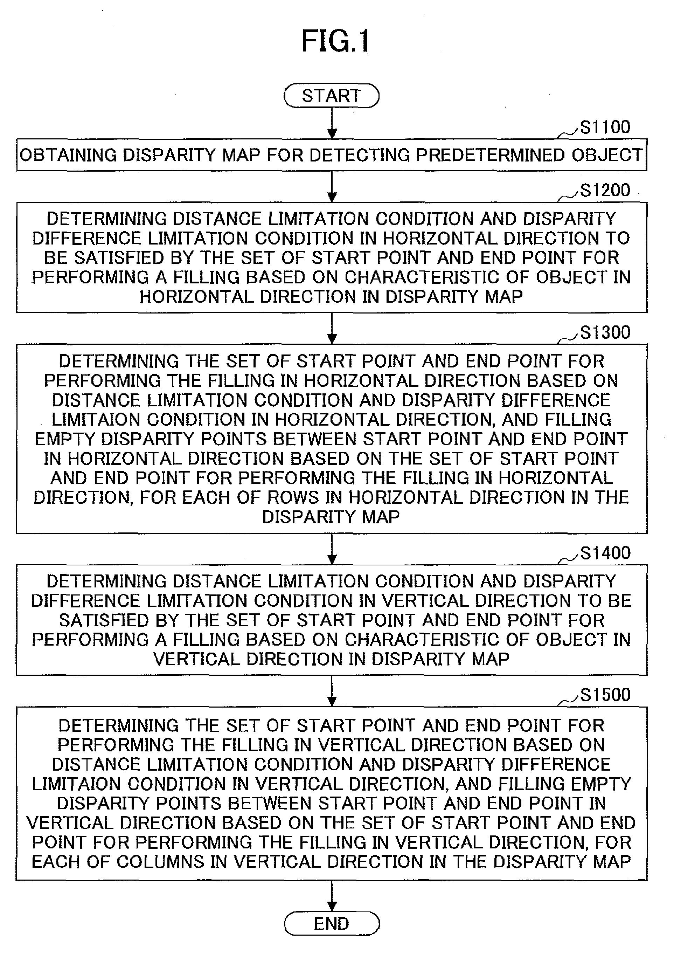

In the following, an example of an overall flow of a method for processing a sparse disparity map according to an embodiment of the present invention will be described with reference to FIG. 1.

FIG. 1 is an overall flowchart of the method for processing a sparse disparity map according to an embodiment of the present invention.

As illustrated in FIG. 1, in step S1100, a disparity map for detecting a predetermined object is obtained.

All of the disparity map obtaining method in the art may be applied to the present invention. For example, the disparity map may be obtained by picking up images by a binocular camera, a multi-camera or a stereoscopic camera and calculating. Specifically, for example, a left image and a right image may be picked up by a binocular camera, and the disparity may be obtained by performing a calculation based on the left and right images. Alternatively, a depth map may be obtained from a stereogram, and the disparity map may be obtained from the depth map.

Alternatively, the disparity map may also be transmitted locally or remotely via a network such a wireless network.

In step S1200, a distance limitation condition and a disparity difference limitation condition in a horizontal direction to be satisfied by a set of a start point and an end point for performing a filling, are determined based on the characteristic of the object in the horizontal direction in the disparity map.

In an example, a horizontal distance of the set of the start point and the end point for performing a filling may be less than a predetermined upper limit threshold of the horizontal distance, and an absolute difference of the disparity of the set of the start point and the end point may be less than a predetermined upper limit threshold of the disparity difference. In the example of a disparity map that is obtained by picking up the rear of a car by a binocular camera, a predetermined upper limit threshold of the horizontal distance may be set to the distance between the left and right boundaries of the rear of the car. Meanwhile, for the purpose of removing the interference of an isolated upright object such as a flagpole or a pole, a predetermined lower limit threshold of the horizontal distance may be set, namely, the set of a start point and an end point may be selected to perform a filling only when the horizontal distance of the set is greater than a predetermined lower limit threshold of the horizontal distance at the same time, since the object leading to the interference is usually an object with a relatively narrow width.

In step S1300, the set of the start point and the end point for performing the filling in the horizontal direction is determined based on the distance limitation condition and the disparity difference limitation condition in the horizontal direction, and empty disparity points between the start point and the end point in the horizontal direction are filled based on the set of the start point and the end point for performing the filling in the horizontal direction, for each of the rows in the horizontal direction in the disparity map.

In an example, an edge detection in the vertical direction is performed to position vertical boundaries of the object, before performing the filling of the disparity points in the horizontal direction. The filling of the disparity points in the horizontal direction is performed within the range of the vertical boundaries of the object. In this way, it is possible to improve the efficiency of the filling of the disparity points.

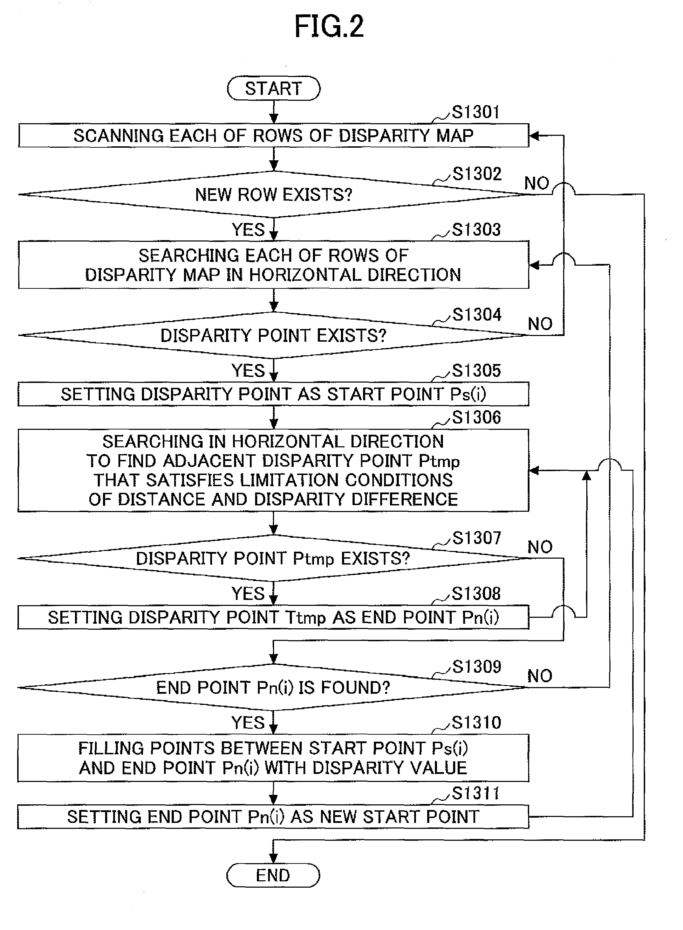

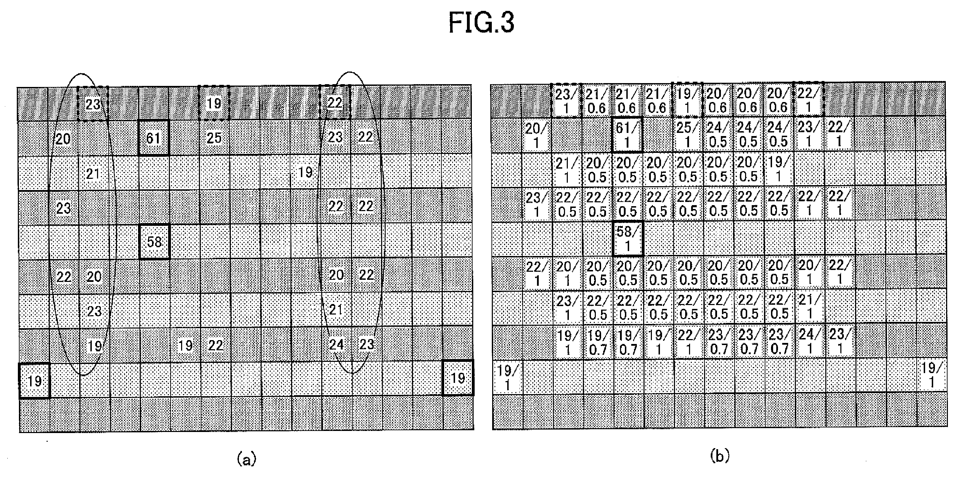

In the following, an example of the method for filling disparity points in the horizontal direction will be described with reference to FIGs. 2 and 3.

In step S1400, a distance limitation condition and a disparity difference limitation condition in the vertical direction to be satisfied by the set of a start point and an end point for performing a filling, are determined based on the characteristic of the object in a vertical direction in the disparity map.

Step S1400 is similar to step S1200 and is different in that the distance limit condition and the disparity difference limit condition are determined to fill the disparity points in the vertical direction.

In an example, a vertical distance of the set of the start point and the end point for performing a filling may be less than a predetermined upper limit threshold of the vertical distance, and an absolute difference of the disparity of the set of the start point and the end point may be less than a predetermined upper limit threshold of the disparity difference. In the example of a disparity map that is obtained by picking up the rear of a car by a binocular camera, a predetermined upper limit threshold of the vertical distance may be set to the distance between the left and right boundaries of the rear of the car. Meanwhile, for the purpose of removing the interference of an object such as a lane line, a predetermined lower limit threshold of the vertical distance may be set, namely, the set of a start point and an end point may be selected to perform a filling only when the vertical distance of the set is greater than a predetermined lower limit threshold of the vertical distance at the same time, since the object leading to the interference is usually an object that has a relatively small height and disparity values gradually changing in the vertical direction.

In step S1500, the set of the start point and the end point for performing the filling in the vertical direction is determined based on the distance limitation condition and the disparity difference limitation condition in the vertical direction, and empty disparity points between the start point and the end point in the vertical direction are filled based on the set of the start point and the end point for performing the filling in the vertical direction, for each of the columns in the vertical direction in the disparity map.

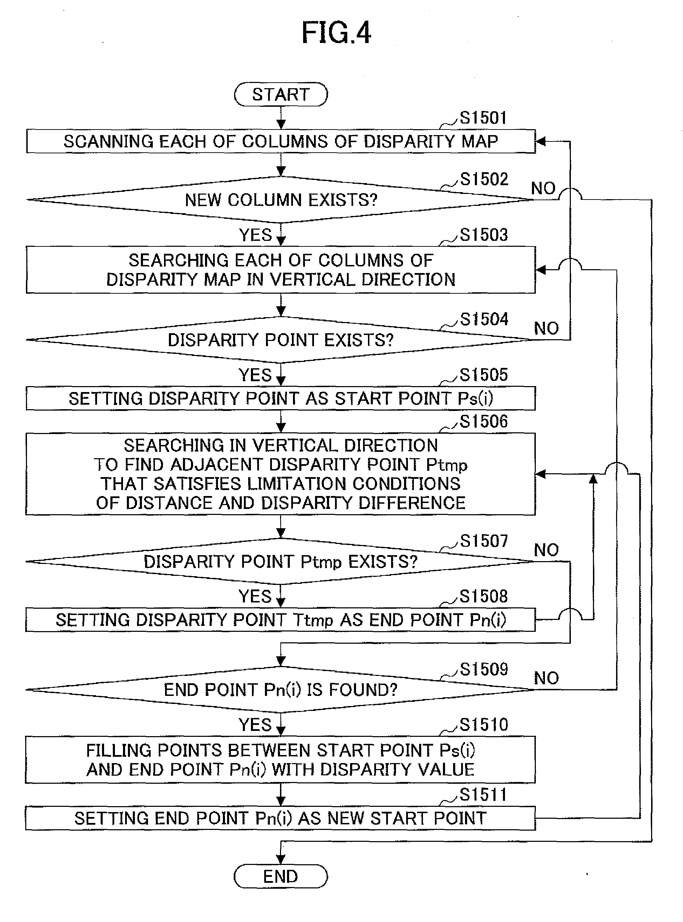

In the following, an example of the method for filling disparity points in the vertical direction will be described with reference to FIGs. 4 to 6.

In an example, in the filling process of the disparity points, a process for removing the noise is further performed. Specifically, in the step of determining the set of the start point and the end point for performing the filling in the horizontal and/or vertical direction, disparity points that cannot be used in the filling and have a likelihood of the background greater than a predetermined threshold are removed. For example, in the example of the vehicle detection, in the process of determining the set of the start point and the end point for performing the filling in the vertical direction, continuous disparity points at the bottom of the disparity map that have disparity values gradually changing in the vertical direction may be regarded as an object such as a lane or the like and be removed from the disparity map.

Furthermore, in an example, the empty disparity points to be filled may have a relevant confidence value, and the more the sets of the start point and the end point that can have filled an empty disparity point exist, the greater is the relevant confidence value that is given to the empty disparity point, when the filling of the empty disparity points of one row in the horizontal direction or one column in the vertical direction is performed. In the following, an example of the relevant confidence values of the disparity points to be filled, will be described with reference to the filling process of the disparity points in the horizontal direction in FIG. 2 and 3 and the filling process of the disparity points in the vertical direction in FIGs. 4 to 6.

It should be noted that, the order of the execution is not limited to the order in which the disparity point filling in the horizontal direction of step S1300 is performed before the disparity point filling in the vertical direction of step S1500 as illustrated in FIG. 1. In actuality, the order of the disparity point filling in the horizontal direction and the disparity point filling in the vertical direction may be determined based on the characteristics of the object to be detected and the features of the disparity map.

In an example, the filling of the disparity points in the horizontal direction may be performed before performing the filling of the disparity points in the vertical direction, if the characteristic in the horizontal direction of the object to be detected, such as the horizontal boundary is insufficient. For example, usually, a disparity map of the vehicle obtained by picking up the rear of a vehicle by a binocular camera has relatively clear vertical edges (the left and right boundaries, i.e., the boundaries on the left and right sides of the object extending along the vertical direction), but the horizontal edges are not very clear (the upper and lower boundaries). For such a detection object, because the disparity values of the rear of the vehicle in the horizontal direction are similar, the disparity point filling in the horizontal direction may be performed first; therefore, it is possible to ensure the improvement of effective disparity points.

In another example, the filling of the disparity points in the vertical direction may be performed before performing the filling of the disparity points in the horizontal direction, if the characteristic of the object in the vertical direction is insufficient.

It should be noted that, the disparity point filling in the horizontal and/or vertical direction may be performed repeatedly, until a satisfactory disparity map is obtained. Additionally, in another example, the object detection may be performed based on the obtained disparity map after the filling process of each time, and it is determined whether the loop of the disparity point filling of the horizontal or vertical direction is continued or not based on the result of the object detection.

According to the method and the apparatus for processing a sparse disparity map, the distance limitation conditions and the disparity difference limitation conditions in a horizontal direction and a vertical direction to be satisfied by a set of a start point and an end point for performing a filling are determined based on characteristics of the object in the horizontal direction and the vertical direction, and the disparity points are filled in the horizontal direction based on the determined limitation conditions in the horizontal direction, and the disparity points are filled in the vertical direction based on the determined limitation conditions in the vertical direction; therefore, a disparity map in which the disparity points applicable to the object detection are filled can be obtained, accordingly the object detection can be performed directly based on the disparity map in which the disparity points are filled.

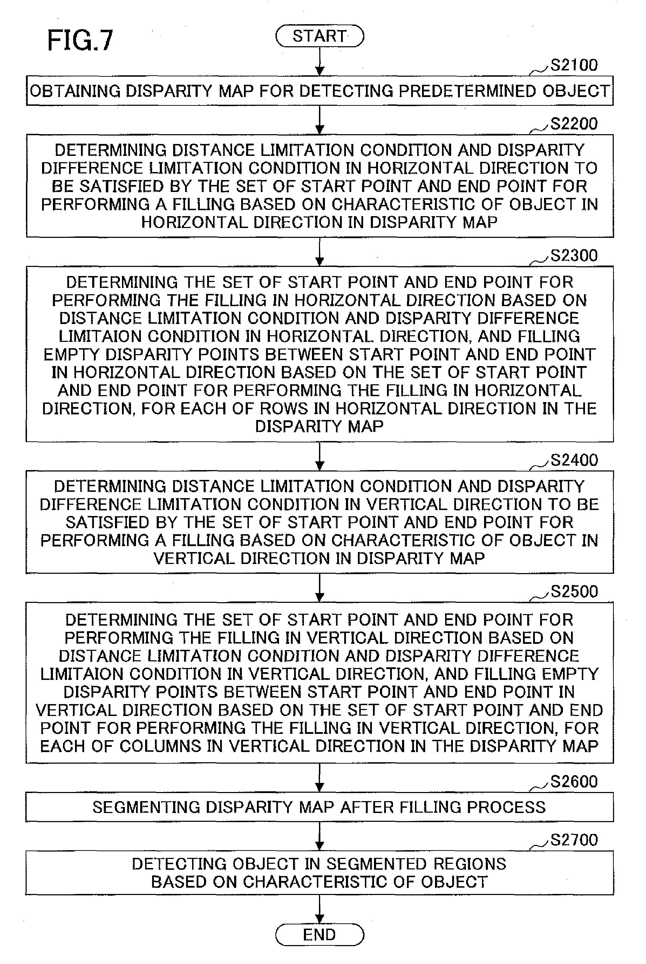

After the disparity map is obtained for which the method for processing a sparse disparity map as illustrated in FIG. 1 is performed, the filled disparity map may be segmented and the object detection of the segmented regions may be performed based on the characteristics of the object. In the following, an example of the method for detecting an object in which the filling process of a sparse disparity map is included, will be described with reference to FIG. 7.

FIGs. 8(a) to 8(f) show the result of the method for processing a sparse disparity map according to the embodiment of the present invention and the effect of the image segmentation and the object detection based on such a method. FIG. 8(a) illustrates an original grayscale image and the detected disparity points thereof, which are pale color points with a burr-shape, FIG. 8(b) illustrates a disparity map obtained by filling empty disparity points of the original disparity map in the horizontal direction, FIG. 8(c) illustrates a disparity map obtained by filling empty disparity points of the disparity map illustrated in FIG. 8(b) in the vertical direction, FIG. 8(d) illustrates a disparity map obtained by filling empty disparity points of the disparity map illustrated in FIG. 8(c) in the horizontal direction, FIG. 8(e) illustrates a disparity map obtained by filling empty disparity points of the disparity map illustrated in FIG. 8(d) in the vertical direction and performing an image region segmentation, and FIG. 8(f) illustrates the result of an object detection after the image region segmentation.

### <1.2. Example of Method for Filling Disparity Points in Horizontal Direction>

In the following, the method for filling the disparity points in the horizontal direction according to the embodiment of the present invention will be described with reference to FIG. 2, and such a method may be applied to step S 1300 illustrated in FIG. 1. For the sake of convenience, the disparity point filling process in the horizontal direction may also be called a "x-connect process", as the name implies, the filling process of the disparity points in the horizontal direction is similar to a connection process between a start point and an end point in the horizontal direction, i.e., the x-direction.

FIG. 2 is a flowchart of a method for filling disparity points in a horizontal direction according to an embodiment of the present invention.

As illustrated in FIG. 2, in step S1301, the system scans each of the rows of the disparity map. The scanning order may be from top to bottom or from bottom to top.

In step S1302, it is determined whether a new row exists or not. If a new row exists, the new row are read for the subsequent process, otherwise, the x-connect process ends.

In step S1303, the disparity points of each row is searched horizontally from left to right or from right to left, and the values of disparity points are determined one by one. A zero disparity value may be regarded as no disparity value, and may also be called a "point without disparity value". In this case, the searching order is from left to right.

In step S1304, if a disparity point exists, the process proceeds to step S 13 05, and if none of the disparity points exist, the process returns to step S1301 and the searching of a new row starts.

In step S1305, the existing disparity point that is determined in step S1304 is set to the start point Ps(i), where i represents the set number (the number of the pairs) of the start points and the end points.

In step S1306, the searching in the horizontal direction from left to right is continued to find an adjacent disparity point Ptmp that satisfies the limitation conditions of the distance and the disparity difference.

In step S1307, it is determined whether a new disparity point Ptmp that satisfies the limitation conditions of the distance and the disparity difference from the start point Ps(i) exists or not. The distance limitation condition and the disparity difference condition are obtained as illustrated in step S1200 in FIG. 1 above. For example, in an example, an upper limitation condition of the distance in the horizontal direction between a start point and an end point may be set to 9 pixels, and the distance limitation may also be adjusted based on a size characteristic in the horizontal direction of the object to be detected. In an example, the upper limitation condition of the difference of the disparity values of a start point and an end point may be set to 5, and the limitation of the difference of the disparity values may also be adjusted based on the distributions of the positions and the disparity value of depth of the object to be detected.

If it is determined that a new disparity point Ptmp that satisfies the limitation conditions of the distance and the disparity difference from the start point Ps(i) exists, the process proceeds to step S1308.

In step S1308, the new disparity point Ptmp is set as the corresponding end point Pn(i), and then, the process returns to step S1306 and the process is continued to find a new end point that satisfies the limitation conditions of the distance and the disparity difference from the start point Ps(i). In this case, the last point that satisfies the limitation conditions of the distance and the disparity difference from the start point Ps(i) may be set to the end point.

In step S1307, if it is determined that a new disparity point Ptmp that satisfies the limitation conditions of the distance and the disparity difference from the start point Ps(i) does not exist, the process proceeds to step S1309.

In step S1309, it is determined whether an end point Pn(i) corresponding to the start point Ps(i) is found.

If it is determined that an end point Pn(i) corresponding to the start point Ps(i) is not found in step S1309 (NO in step S1309), the process returns to step S 1303 and continues to search from left to right (supposing the searching direction is from the left to right) in the current row to find a disparity point. In this case, the searching is continued to find a disparity point from the last point in the process of searching the end point of the Ps(i).

If it is determined that an end point Pn(i) corresponding to the start point Ps(i) is found in step S1309 (YES in step S1309), the process proceeds to S1310.

In step S1310, the disparity points between the start point and the end point are filled and set to a value, the value may be equal to the start point Ps(i) or the end point Pn(i); and the value may also be an intermediate value thereof, such as the average value or a value changing gradually which the disparity values are connected more smoothly. It should be noted that, the values of the non-empty disparity points between the start point and the end point may be retained intact; and alternatively, the non-empty disparity points may also be regarded as the empty disparity points and the filling process may also be performed for the non-empty disparity points. In this case, the values of the non-empty disparity points between the start point and the end point are retained intact. After step S 1310, the process proceeds to step S 1311.

In step S1311, the end point Pn(i) is set to the new start point and the process returns to step S1306. In this way, horizontal searching is continued in the original direction, to find a disparity point as an end point candidate that satisfies the limitation conditions of the distance and the disparity difference from the new start point.

The searching is continued, until the scan process and the filling process are performed for all of the rows.

In the following, a specific example of the x-connect process will be described with reference to FIG. 3. The table in FIG. 3 represents a disparity map, the numbers in the table represent the disparity values of pixels, and the object of the process is to perform a connection process for the disparity map by the x-connect method. Here, supposing that the upper limitation condition of the distance is 9 pixels and the limitation condition of the disparity value difference is 5. FIG. 3(a) is a schematic drawing representing an original disparity map, and FIG. 3(b) illustrates a schematic drawing representing a disparity map after the disparity point filling process in the horizontal direction, i.e., an x-connect process.

As described above, before the disparity point filling in the horizontal direction, a pre-processing for improving the efficiency, such as object vertical edge detection or sharp edge detection for positioning the vertical boundaries of the object, may be included. In this way, noise can be removed, and only the disparity point filling in the horizontal direction within the vertical boundaries is performed subsequently; therefore, the efficiency of the x-connect method can be improved. The vertical boundary detection may be a Sobel boundary detection.

As illustrated in FIG. 3, in an example, the x-connect method may be performed as follows. From the disparity point with disparity value 23 marked by the dashed line rectangle box in the upper left corner, i.e., the start point, the searching is performed from left to right in the horizontal direction. The points with disparity value 19 and 22 marked by dashed line rectangle box at the right side are found. In this example, the disparity point with disparity value 22 may be set to the end point, because both of the two points satisfy the limitation conditions of the distance and the disparity difference, and there is no disparity point that satisfies the conditions at the right side. The empty disparity points between the start point and the end point are filled, and the value for filling is the average value of the disparity values of the start point and the end point. In this example, the upper limitation condition of the distance is 9 pixels and the limitation condition of the disparity difference is 5. For another two disparity points with disparity values 61 and 58 marked by the solid rectangle boxes at the second row and the fifth row, respectively, the process is not performed since the limitation condition of the disparity difference is not satisfied; and the process is also not performed for the two disparity points with disparity value 19 marked by the solid line rectangle boxes at the next-to-last row, since the distance limitation condition is not satisfied. In this case, the disparity points marked by the solid line rectangle boxes mean that the disparity values thereof do not satisfy the requirement of the disparity value candidate as the start point and the end point in the process of scanning start points and end points. The disparity points at the first row marked by the dashed line rectangle box mean that the disparity values satisfy the requirement of the disparity value candidate as the start point and the end point. The ellipse in FIG. 3 represents the detected main vertical boundaries, and the disparity point filling process in the horizontal direction, i.e., the x-connect process of this example starts from such boundaries.

Furthermore, in an example, in order to improve the connection performance during the actual operation, confidence values of the disparity points may be further set. For example, as illustrated in FIG. 3, "23/1" at the first line represents disparity value 23 and confidence value 1 (i.e., an original disparity point), and "21/0.6" represents disparity value 21 and confidence value 0.6 (a filled disparity point with confidence value 0.6).

In general, the more the sets of the start point and the end point that can have filled an empty disparity point exist, the greater is the relevant confidence value given to the empty disparity point, when the filling of the empty disparity points of one row in the horizontal direction is performed.

In an example, the confidence value may be set as follows. If an end point of disparity points that satisfies the requirement is found based on a start point, the confidence values of the disparity points between the start point and the end point on which a connection (filling) process is performed are set to 0.5; after an end point is found, the searching is continued and it is determined whether a new point that satisfies the requirement exists or not until the distance limitation (such as 12 pixels) is reached; if a new point that satisfies the requirement exists, the new point is set to the end point and the confidence values of the disparity points between the start point and the new end point on which a connection (filling) process is performed are incremented by 1. In another example, a punitive measure may also be set, for example, the confidence values of the disparity points that do not satisfy the requirement may be decremented; alternatively, other adjustment measures may also be used. The confidence value of an original disparity point is set to 1.0, and never changes due to the x-connect process.

According to such confidence values, it is possible to provide a method for representing the reliability of the disparity points within the range of the distance limitation and the disparity value difference limitation on which a connection process is performed. As the advantage of providing the confidence values for the disparity points, a subsequent process or a detection process can be performed properly based on the confidence values; for example, only the disparity points with a confidence greater than 0.7 are used for the detection.

FIG. 8(b) illustrates a disparity map obtained by filling empty disparity points of the original disparity map in the horizontal direction. As illustrated in FIG. 8(b), a lot of disparity points for which the horizontal lines are missing is filled.

### <1.3. Example of Method for Filling Disparity Points in Vertical Direction>

In the following, the method for filling the disparity points in the vertical direction according to the embodiment of the present invention will be described with reference to FIG. 4, and such a method may be applied to step S 1500 illustrated in FIG. 1. For the sake of convenience, the disparity point filling process in the vertical direction may also be called a "y-connect process", as the name implies, the filling process of the disparity points in the vertical direction is similar to a connection process between a start point and an end point in the vertical direction, i.e., the x-direction.

FIG. 4 is a flowchart of a method for filling disparity points in a vertical direction according to an embodiment of the present invention. The y-connect process illustrated in FIG. 4 is similar to the x-connect process illustrated in FIG. 2, and is merely different in that the process is performed in the vertical direction, i.e., y-direction.

As illustrated in FIG. 4, in step S1501, the system scans each of the columns of the disparity map. The scanning order may be from left to right or from right to left.

In step S1502, it is determined whether a new column exists. If a new column exists, the new column is read for the subsequent process, otherwise, the y-connect process ends.

In step S1503, the disparity points of each column is searched vertically, and the values of disparity points are determined one by one. A zero disparity value may be regarded as no disparity value, and may also be called a "point without disparity value". It should be noted that the searching order may be from top to bottom, or from bottom to top; in this case, the searching order is from top to bottom.

In step S1504, if a disparity point exists, the process proceeds to step S1505, and if none of the disparity points exist, the process returns to step S1501 and the searching of a new column starts.

In step S1505, the existing disparity point that is determined in step S1504 is set to the start point Ps(i), where i represents the set number (the number of the pairs) of the start points and the end points.

In step S1506, the searching in the vertical direction from top to bottom is continued to find an adjacent disparity point Ptmp that satisfies the limitation conditions of the distance and the disparity difference.

In step S1507, it is determined whether a new disparity point Ptmp that satisfies the limitation conditions of the distance and the disparity difference from the start point Ps(i) exists.

The distance limitation condition and the disparity difference condition are obtained as illustrated in step S1200 in FIG. 1 above. For example, in an example, an upper limitation condition of the distance in the vertical direction between a start point and an end point may be set to 9 pixels, and the distance limitation may also be adjusted based on a size characteristic in the vertical direction of the object to be detected. In an example, the upper limitation condition of the difference of the disparity values of a start point and an end point may be set to 5, and the limitation of the difference of the disparity values may also be adjusted based on the distributions of the positions and the disparity value of depth of the object to be detected. Furthermore, a lower limitation condition of the distance in the vertical direction may also be set to 4 pixels. Such distance limitation is different from the distance limitation of the x-connect process described above, because of the variation of the requirement of the object detection. The disparity map may be affected by the ground, and may be stretched upward; therefore, in order to avoid the unnecessary connection of the disparity points of the gradually changing ground, the lower limitation of 4 pixels is further set. Generally, the distance limitation condition in the vertical direction includes a condition that a vertical distance between the start point and the end point is greater than a predetermined positive number, if a non-detection object with a disparity value which gradually changes in the vertical direction exists in the disparity map. Similarly, in order to avoid the effect to the x-connect by a vertical plane, a lower distance limitation condition may also be set in the x-connect process described above.

If it is determined that a new disparity point Ptmp that satisfies the limitation conditions of the distance and the disparity difference from the start point Ps(i) exists, the process proceeds to step S1508.

In step S1508, the new disparity point Ptmp is set as the corresponding end point Pn(i), and then, the process returns to step S 1506 and the process is continued to find a new end point that satisfies the limitation conditions of the distance and the disparity difference from the start point Ps(i). In this case, the last point that satisfies the limitation conditions of the distance and the disparity difference from the start point Ps(i) may be set to be the end point.

In step S1507, if it is determined that a new disparity point Ptmp that satisfies the limitation conditions of the distance and the disparity difference from the start point Ps(i) does not exist, the process proceeds to step S1509.

In step S1509, it is determined whether an end point Pn(i) corresponding to the start point Ps(i) is found.

If it is determined that an end point Pn(i) corresponding to the start point Ps(i) is not found in step S1509 (NO in step S1509), the process returns to step S1503 and continues to search from top to bottom (supposing the searching direction is from top to bottom) in the current column to find a disparity point. In this case, the searching is continued to find a disparity point from the last point in the process of searching for the end point of the Ps(i).

If it is determined that an end point Pn(i) corresponding to the start point Ps(i) is found in step S1509 (YES in step S1509), the process proceeds to S 1510.

In step S1510, the disparity points between the start point and the end point are filled and set to a value. The value may be equal to the start point Ps(i) or the end point Pn(i); and the value may also be an intermediate value thereof, such as the average value or a value changing gradually by which the disparity values are connected more smoothly. It should be noted that, in this example, a noise reduction process is performed in the filling process, for example, disparity points that cannot be used in the filling and have a likelihood of the background greater than a predetermined threshold are removed. The removed points may be, for example, the points that do not satisfy the requirement of the connection, such as isolated points or points forming a broken white line; meanwhile, the start point, the end point and the effective points therebetween are retained. After step S 1510, the process proceeds to step S 1511.

In step S1511, the end point Pn(i) is set to the new start point and the process returns to step S1506. In this way, a vertical searching is continued in the original direction to find a disparity point as an end point candidate that satisfies the limitation conditions of the distance and the disparity difference from the new start point.

The searching is continued, until the scan process and the filling process are performed for all of the columns.

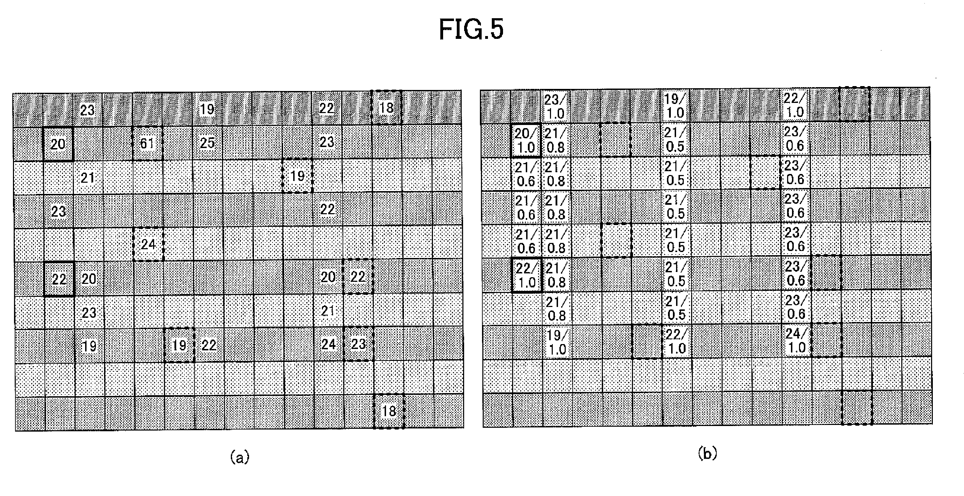

In the following, a specific example of the y-connect process will be described with reference to FIG. 5. The table in FIG. 5 represents a disparity map, the numbers in the table represent the disparity values of pixels, and the object of the process is to perform a connection process for the disparity map by the y-connect method. In this example, the distance limitation is that the disparity point is less than or equal to 12 pixels and greater than or equal to 4 pixels, and the disparity value difference limitation is 5. As described above, the distance limitation is different from the distance limitation of the x-connect process, because of the variation of the requirement of the object detection. The disparity map may be affected by the ground, and may be stretched upward; therefore, in order to avoid the unnecessary connection of the disparity points of the gradually changing ground, the lower limitation of 4 pixels is further set. FIG. 5(a) is a schematic drawing representing an original disparity map, and FIG. 5(b) is a schematic drawing representing a disparity map after the disparity point filling process in the vertical direction, i.e., a y-connect process; the disparity point marked by the solid line rectangle boxes represents the start point that satisfies the connection requirement, and the disparity points marked by the dashed line rectangle box represent disparity points that do not satisfy the connection requirement.

As illustrated in FIG. 5, in an example, the y-connect method may be performed as follows. From the disparity point with disparity value 20 marked by the solid line rectangle box in the upper left corner, i.e., the start point, the searching is performed from top to bottom in the vertical direction. The point with disparity value 22 marked by the solid line rectangle box is found. In this example, the disparity point with disparity value 22 may be set to the end point, because both of the two points satisfy the limitation conditions of the distance and the disparity difference, and there is no disparity point that satisfies the conditions under this disparity point. The empty disparity points between the start point and the end point are filled, and the value for filling is the average value of the disparity values of the start point and the end point. For another two disparity points with disparity values 61 and 24 marked by the dashed rectangle boxes at the fifth column, the process is not performed since the limitation conditions of the distance and the disparity value difference are not satisfied; and the process is also not performed for the two disparity points with disparity value 18 marked by the dashed line rectangle boxes at the last column except for two empty columns, since the distance limitation condition is exceeded. In this case, the original disparity points that do not satisfy the connection requirement are regarded as noise and not retained. Furthermore, in order to improve the connection performance during the actual operation, confidence values of the disparity points may be further set. The setting method of the confidence value may be similar to the x-connect process, and the description thereof is omitted here.

FIG. 5 illustrates the example of performing the y-connect process for the original disparity map.

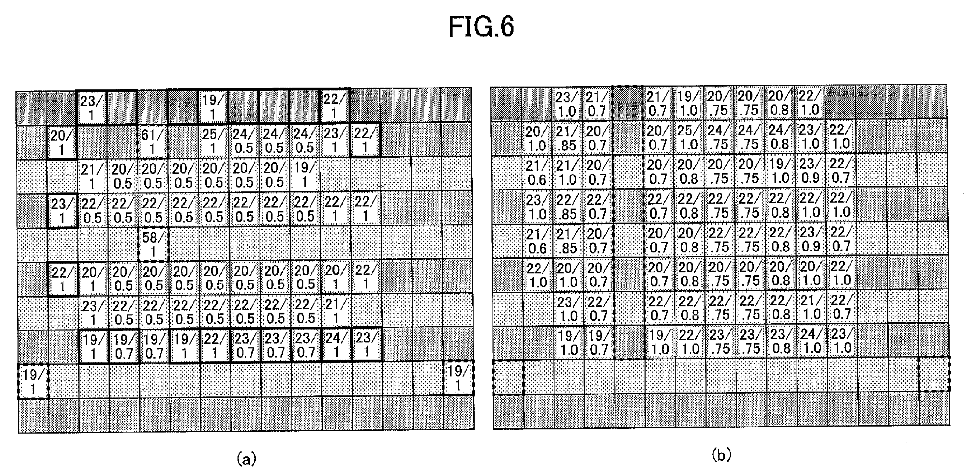

In the following, an example of performing the y-connect after performing the x-connect illustrated in FIG. 3(b) is explained with reference to FIG. 6. FIG. 6(a) illustrates the result of the x-connect process of the disparity map illustrated in FIG. 3(b), where the disparity points marked by a solid line rectangle box represent the start points that satisfy the connection requirement and the disparity points marked by a dashed line rectangle box represent the disparity points that do not satisfy the connection requirement; and FIG. 6(b) illustrates the result of the y-connect process of the disparity map illustrated in FIG. 6(a), where the disparity points marked by a solid line rectangle box represent the start points that satisfy the connection requirement and the disparity points marked by a dashed line rectangle box represent the disparity points that do not satisfy the connection requirement. From FIG. 6(b), the disparity points that do not satisfy the connection requirement are removed as noise from the result; and specifically, there are two disparity points that do not satisfy the requirement (as illustrated by "61/1" and "58/1" marked by the dashed line rectangle boxes in FIG. 6(a)) in the column illustrated by a dashed vertical bar in FIG. 6(b), so that the whole column has a high likelihood of being noise; therefore, the whole column is removed.

It should be noted that, in this example, the original disparity points that do not satisfy the connection requirement are removed as noise when the y-connect process is performed. However, it is just an example and the present invention is not limited to this example. The noise reduction may be performed based on different standards of the noise detection, according to different detection objects and actual requirements.

In this example, as well as the x-connect process, confidence values of the disparity points may be further set. Similarly, in general, the more the sets of the start point and the end point that can have filled an empty disparity point exist, the greater is the relevant confidence value that is given to the empty disparity point is, when the filling of the empty disparity points of one column in the vertical direction is performed.

However, some disparity points have been connected and have the confidence value, because the y-connect process is performed after the x-connect process. In an example, the confidence values of the disparity points to be newly connected in the y-connect process may be obtained by multiplying the confidence values of the x-connect. For example, supposing the current confidence values (the confidence values of the x-connect) are Cc(i) and the confidence values of the start point and the end point obtained in the previous step are Cs(i) and Cn(i), respectively, the new confidence values may be the value of multiplying the average value of these two by the current confidence values Cc(i)×(Cs(i)+Cn(i))/2.

In this way, the whole disparity map is operated by the above steps. As illustrated in FIG. 8(c), in the new disparity map, many vertical lines are connected, i.e., the disparity points are filled in the vertical direction. As illustrated in FIG. 8(c), the disparity points of the main body of the vehicle are enhanced in the vertical direction, and disparity points of the non-vehicle such as the lane are removed.

### <2. Method for Detecting Object Based On Sparse Disparity Map>

In the following, a method for detecting an object based on a sparse disparity map according to an embodiment of the present invention will be described with reference to FIG. 7.

FIG. 7 is a flowchart of a method for detecting an object based on a sparse disparity map according to an embodiment of the present invention.

As illustrated in FIG. 7, in step S2100, the disparity map for detecting the predetermined object is obtained.

In step S2200, a distance limitation condition and a disparity difference limitation condition in the horizontal direction to be satisfied by the set of a start point and an end point for performing a filling, are determined based on the characteristic of the object in a horizontal direction in the disparity map.

In step S2300, the set of the start point and the end point for performing the filling in the horizontal direction is determined based on the distance limitation condition and the disparity difference limitation condition in the horizontal direction, and empty disparity points between the start point and the end point in the horizontal direction are filled based on the set of the start point and the end point for performing the filling in the horizontal direction, for each of the rows in the horizontal direction in the disparity map.

In step S2400, a distance limitation condition and a disparity difference limitation condition in the vertical direction to be satisfied by the set of a start point and an end point for performing a filling, are determined based on the characteristic of the object in a vertical direction in the disparity map.

In step S2500, the set of the start point and the end point for performing the filling in the vertical direction is determined based on the distance limitation condition and the disparity difference limitation condition in the vertical direction, and empty disparity points between the start point and the end point in the vertical direction are filled based on the set of the start point and the end point for performing the filling in the vertical direction, for each of the columns in the vertical direction in the disparity map.

In step S2600, the disparity map is segmented after the filling process. The segmentation method may be one of the conventional methods, such as CCA, k-means, etc. In an example, a segmentation method based on CCA may be used. FIG. 8(e) illustrates an example of segmenting the filled disparity map, where the rectangle boxes represent the segmentation result and the largest rectangle box represents the vehicle of the final detection result. After step S2600, the process proceeds to step S2700.

In step S2700, the object in each of the segmented regions is detected based on the characteristic of the object. The object detection method may be one of the conventional detection methods, such as the detection method based on the color, the gradient, the symmetry, and the size or the position of the object. In an example, considering the particularity of the vehicle disparity map, a simple method of size filtering may be used, and the segmented regions that satisfy the requirements of the width, the height and the height-width ratio are output as the detection result. FIG. 8(f) illustrates the detection result of the grayscale image corresponding to the detection result of the disparity map, where the largest rectangle box represents the final detection result.

Steps S2100 to S2500 are similar to the function and the implementation of steps S1100 to S1500 illustrated in FIG. 1, and the description thereof is omitted here.

According to the method and the apparatus for detecting an object based on a sparse disparity map according to the embodiment of the present invention, distance limitation conditions and disparity difference limitation conditions in a horizontal direction and a vertical direction to be satisfied by a set of a start point and an end point for performing a filling operation are determined based on characteristics of the object in the horizontal direction and the vertical direction, disparity points are filled in the horizontal direction based on the determined limitation conditions in the horizontal direction, and disparity points are filled in the vertical direction based on the determined limitation conditions in the vertical direction; therefore, a disparity map applicable to the object detection in which the disparity points are filled can be obtained, and accordingly the accuracy of the object detection can be improved.

### <3. Sparse Disparity Map Processing Apparatus>

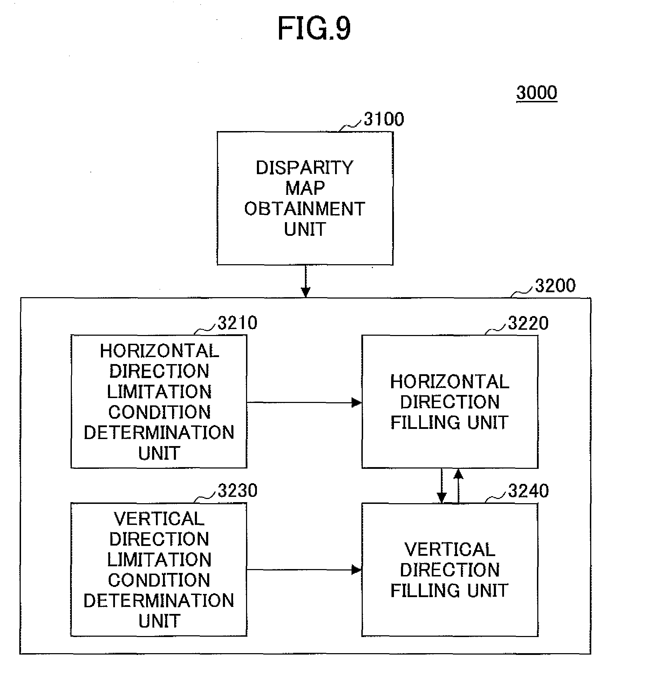

In the following, an apparatus for processing a sparse disparity map according to an embodiment of the present invention will be described with reference to FIG. 9.

FIG. 9 is a block diagram illustrating an apparatus for processing a sparse disparity map 3000 according to an embodiment of the present invention.

As illustrated in FIG. 9, the sparse disparity map processing apparatus 3000 may include a disparity map obtainment unit 3100 and a filling unit 3200. The disparity map obtainment unit 3100 obtains the disparity map for detecting the predetermined object. The filling unit 3200 may include a horizontal direction limitation condition determination unit 3210, a horizontal direction filling unit 3220, a vertical direction limitation condition determination unit 3230 and a vertical direction filling unit 3240. The horizontal direction limitation condition determination unit 3210 determines, based on the characteristic of the object in a horizontal direction in the disparity map, a distance limitation condition and a disparity difference limitation condition in the horizontal direction to be satisfied by a set of a start point and an end point for performing filling. The horizontal direction filling unit 3220 determines the set of the start point and the end point for performing the filling in the horizontal direction based on the distance limitation condition and the disparity difference limitation condition in the horizontal direction, and fills empty disparity points between the start point and the end point in the horizontal direction based on the set of the start point and the end point for performing the filling in the horizontal direction, for each of the rows in the horizontal direction in the disparity map. The vertical direction limitation condition determination unit 3230 determines, based on the characteristic of the object in a vertical direction in the disparity map, a distance limitation condition and a disparity difference limitation condition in the vertical direction to be satisfied by a set of a start point and an end point for performing filling. The vertical direction filling unit 3240 determines the set of the start point and the end point for performing the filling in the vertical direction based on the distance limitation condition and the disparity difference limitation condition in the vertical direction, and fills empty disparity points between the start point and the end point in the vertical direction based on the set of the start point and the end point for performing the filling in the vertical direction, for each of the columns in the vertical direction in the disparity map.

The function and the implementation of the disparity map obtainment unit 3100, and the horizontal direction limitation condition determination unit 3210, the horizontal direction filling unit 3220, the vertical direction limitation condition determination unit 3230 and the vertical direction filling unit 3240 included in the filling unit 3200 may refer to the description of steps S1100 to S1500 illustrated in FIG. 1, and the description thereof is omitted here.

### <4. Object Detection Apparatus Based On Sparse Disparity Map>

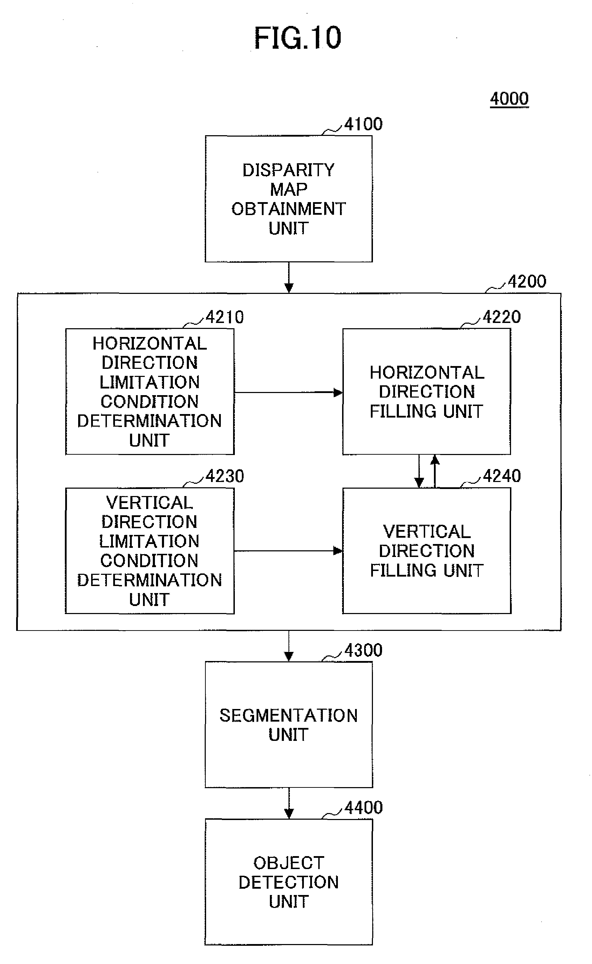

In the following, an apparatus for detecting an object based on a sparse disparity map according to an embodiment of the present invention will be described with reference to FIG. 10.

FIG. 10 is a block diagram illustrating an apparatus for detecting an object based on a sparse disparity map 4000 according to an embodiment of the present invention.

As illustrated in FIG. 10, the object detection apparatus 4000 may include a disparity map obtainment unit 4100, a filling unit 4200, a segmentation unit 4300 and an object detection unit 4400. The disparity map obtainment unit 4100 obtains the disparity map for detecting the predetermined object. The segmentation unit 4300 segments the disparity map after the filling process. The object detection unit 4400 detects the object in the segmented regions based on the characteristic of the object. The filling unit 4200 may include a horizontal direction limitation condition determination unit 4210, a horizontal direction filling unit 4220, a vertical direction limitation condition determination unit 4230 and a vertical direction filling unit 4240. The horizontal direction limitation condition determination unit 4210 determines, based on the characteristic of the object in a horizontal direction in the disparity map, a distance limitation condition and a disparity difference limitation condition in the horizontal direction to be satisfied by a set of a start point and an end point for performing filling. The horizontal direction filling unit 4220 determines the set of the start point and the end point for performing the filling in the horizontal direction based on the distance limitation condition and the disparity difference limitation condition in the horizontal direction, and fills empty disparity points between the start point and the end point in the horizontal direction based on the set of the start point and the end point for performing the filling in the horizontal direction, for each of the rows in the horizontal direction in the disparity map. The vertical direction limitation condition determination unit 4230 determines, based on the characteristic of the object in a vertical direction in the disparity map, a distance limitation condition and a disparity difference limitation condition in the vertical direction to be satisfied by a set of a start point and an end point for performing filling. The vertical direction filling unit 4240 determines the set of the start point and the end point for performing the filling in the vertical direction based on the distance limitation condition and the disparity difference limitation condition in the vertical direction, and fills empty disparity points between the start point and the end point in the vertical direction based on the set of the start point and the end point for performing the filling in the vertical direction, for each of the columns in the vertical direction in the disparity map.

The function and the implementation of the disparity map obtainment unit 4100, the horizontal direction limitation condition determination unit 4210, the horizontal direction filling unit 4220, the vertical direction limitation condition determination unit 4230 and the vertical direction filling unit 4240 included in the filling unit 4200, the segmentation unit 4300 and the object detection unit 4400 may refer to the description of steps S2100 to S2700 illustrated in FIG. 7, and the description thereof is omitted here.

### <5. System Hardware Configuration>

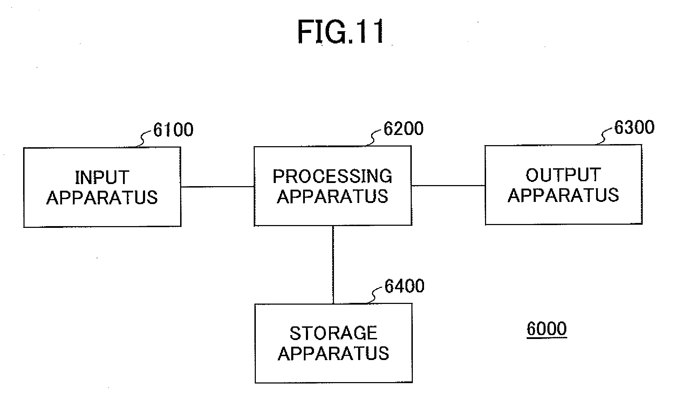

The present invention may also be implemented as a system for implementing the sparse disparity map processing method and the object detection method described above. FIG. 11 is an overall hardware block diagram illustrating a sparse disparity map processing system/an object detection system 6000 according to the embodiment of the present invention. As illustrated in FIG. 11, the sparse disparity map processing system/the object detection system 6000 may include an input apparatus 6100 for inputting relevant images or information such as left and right images picked up by a binocular camera or a stereo video picked up by a stereoscopic camera, for example, including a keyboard, a mouse, a communication network and an input device connected thereto, etc.; a processing apparatus 6200 for implementing the method for processing a sparse disparity map and/or the method for detecting an object according to the embodiment of the present invention or being implemented as the apparatus for processing a sparse disparity map and/or the apparatus for detecting an object according to the embodiment of the present invention, such as a CPU of a computer or other chips having processing ability, etc., that can be connected to a network (not shown) such as the Internet and obtain data such as left and right images via the network based on the requirements of processing procedures; an output apparatus 6300 for outputting the result obtained by implementing the sparse disparity map processing method or the object detection method to the outside, such as a screen, a printer, a communication network and a remote output device connected thereto, etc.; and a storage apparatus 6400 for storing images, results, commands and intermediate data such as the disparity map, the limitation conditions of the distance and the disparity difference in the horizontal direction, the limitation conditions of the distance and the disparity difference in the vertical direction, the result of the horizontal filling, the result of the vertical filling, the result of the region segmentation, the result of the object detection, etc., by a volatile method or a nonvolatile method, such as various kinds of volatile or nonvolatile memory including a random-access memory (RAM), a read-only memory (ROM), a hard disk and a semiconductor memory.

### <6. Summary>

As described above, in the embodiments of the present invention, the method and the apparatus for processing a sparse disparity map based on the characteristic of a predetermined object to be detected, and the method and the apparatus for detecting an object based on a sparse disparity map, are provided.

According to an embodiment, the method for processing a sparse disparity map based on a characteristic of a predetermined object to be detected, may include obtaining the disparity map for detecting the predetermined object; determining, based on the characteristic of the object in a horizontal direction in the disparity map, a distance limitation condition and a disparity difference limitation condition in the horizontal direction to be satisfied by a set of a start point and an end point for performing a filling; determining the set of the start point and the end point for performing the filling in the horizontal direction based on the distance limitation condition and the disparity difference limitation condition in the horizontal direction, and filling empty disparity points between the start point and the end point in the horizontal direction based on the set of the start point and the end point for performing the filling in the horizontal direction, for each of rows in the horizontal direction in the disparity map; determining, based on the characteristic of the object in a vertical direction in the disparity map, a distance limitation condition and a disparity difference limitation condition in the vertical direction to be satisfied by a set of a start point and an end point for performing a filling; and determining the set of the start point and the end point for performing the filling in the vertical direction based on the distance limitation condition and the disparity difference limitation condition in the vertical direction, and filling empty disparity points between the start point and the end point in the vertical direction based on the set of the start point and the end point for performing the filling in the vertical direction, for each of columns in the vertical direction in the disparity map.

According to an embodiment of the present invention, the method for detecting an object based on a sparse disparity map, may include obtaining the disparity map for detecting the predetermined object; determining, based on the characteristic of the object in a horizontal direction in the disparity map, a distance limitation condition and a disparity difference limitation condition in the horizontal direction to be satisfied by a set of a start point and an end point for performing a filling; determining the set of the start point and the end point for performing the filling in the horizontal direction based on the distance limitation condition and the disparity difference limitation condition in the horizontal direction, and filling empty disparity points between the start point and the end point in the horizontal direction based on the set of the start point and the end point for performing the filling in the horizontal direction, for each of rows in the horizontal direction in the disparity map; determining, based on the characteristic of the object in a vertical direction in the disparity map, a distance limitation condition and a disparity difference limitation condition in the vertical direction to be satisfied by a set of a start point and an end point for performing a filling; determining the set of the start point and the end point for performing the filling in the vertical direction based on the distance limitation condition and the disparity difference limitation condition in the vertical direction, and filling empty disparity points between the start point and the end point in the vertical direction based on the set of the start point and the end point for performing the filling in the vertical direction, for each of columns in the vertical direction in the disparity map; segmenting the disparity map after the filling process; and detecting the object in the segmented regions based on the characteristic of the object.

According to an embodiment of the present invention, the apparatus for processing a sparse disparity map based on a characteristic of a predetermined object to be detected, may include a disparity map obtainment unit configured to obtain the disparity map for detecting the predetermined object; a horizontal direction limitation condition determination unit configured to determine, based on the characteristic of the object in a horizontal direction in the disparity map, a distance limitation condition and a disparity difference limitation condition in the horizontal direction to be satisfied by a set of a start point and an end point for performing a filling; a horizontal direction filling unit configured to determine the set of the start point and the end point for performing the filling in the horizontal direction based on the distance limitation condition and the disparity difference limitation condition in the horizontal direction, and fill empty disparity points between the start point and the end point in the horizontal direction based on the set of the start point and the end point for performing the filling in the horizontal direction, for each of rows in the horizontal direction in the disparity map; a vertical direction limitation condition determination unit configured to determine, based on the characteristic of the object in a vertical direction in the disparity map, a distance limitation condition and a disparity difference limitation condition in the vertical direction to be satisfied by a set of a start point and an end point for performing a filling; and a vertical direction filling unit configured to determine the set of the start point and the end point for performing the filling in the vertical direction based on the distance limitation condition and the disparity difference limitation condition in the vertical direction, and fill empty disparity points between the start point and the end point in the vertical direction based on the set of the start point and the end point for performing the filling in the vertical direction, for each of columns in the vertical direction in the disparity map.

According to an embodiment of the present invention, the apparatus for detecting an object based on a sparse disparity map, may include a disparity map obtainment unit configured to obtain the disparity map for detecting the predetermined object; a horizontal direction limitation condition determination unit configured to determine, based on the characteristic of the object in a horizontal direction in the disparity map, a distance limitation condition and a disparity difference limitation condition in the horizontal direction to be satisfied by a set of a start point and an end point for performing a filling; a horizontal direction filling unit configured to determine the set of the start point and the end point for performing the filling in the horizontal direction based on the distance limitation condition and the disparity difference limitation condition in the horizontal direction, and fill empty disparity points between the start point and the end point in the horizontal direction based on the set of the start point and the end point for performing the filling in the horizontal direction, for each of rows in the horizontal direction in the disparity map; a vertical direction limitation condition determination unit configured to determine, based on the characteristic of the object in a vertical direction in the disparity map, a distance limitation condition and a disparity difference limitation condition in the vertical direction to be satisfied by a set of a start point and an end point for performing a filling; a vertical direction filling unit configured to determine the set of the start point and the end point for performing the filling in the vertical direction based on the distance limitation condition and the disparity difference limitation condition in the vertical direction, and fill empty disparity points between the start point and the end point in the vertical direction based on the set of the start point and the end point for performing the filling in the vertical direction, for each of columns in the vertical direction in the disparity map; a segmentation unit configured to segment the disparity map after the filling process; and an object detection unit configured to detect the object in the segmented regions based on the characteristic of the object.

According to the method and the apparatus for processing a sparse disparity map, and the method and the apparatus for detecting an object with such sparse disparity map processing process, distance limitation conditions and disparity difference limitation conditions in a horizontal direction and a vertical direction to be satisfied by a set of a start point and an end point for performing a filling are determined based on characteristics of the object in the horizontal direction and the vertical direction, disparity points are filled in the horizontal direction based on the determined limitation conditions in the horizontal direction, and disparity points are filled in the vertical direction based on the determined limitation conditions in the vertical direction; therefore, a disparity map in which the disparity points applicable to the object detection are filled can be obtained, accordingly the object detection can be performed directly based on the disparity map in which the disparity points are filled.

The above description of the embodiments is just for describing the present invention, and various modifications, replacements or combinations may be made by persons skilled in the art without departing from the scope of the present invention.

For example, as an example of the object to be detected, the process of filling the sparse disparity map based on the characteristic of a vehicle to be detected, is described above. However, this is just an example, and the present invention is not limited to this and may be applied to other objects such as a guardrail or a pedestrian.

As described above, the filling process of the sparse disparity map is performed in the order that the filling in the horizontal direction (i.e., x-connect) is performed before performing the filling in the vertical direction (i.e., y-connect). However, it is just an example, the y-connect may also be performed before the x-connect, according to the characteristics of the object and the disparity map as needed. Furthermore, the repetition times of the x-connect and the y-connect may also be set as needed.

The basic principle of the present invention is described above with reference to the embodiments. Any one or all of the steps or units of the method or apparatus according to the present invention may be implemented by hardware, software or a combination thereof in any one of computing devices (including a processor, a storage medium, etc.) or a network of computing devices, and it can be implemented by persons skilled in the art who have read the specification of the present application.

Therefore, the present invention can also be realized by a program or a set of programs running on any one of computing devices. The computing devices may be well known general-purpose devices. Therefore, the present invention may also be implemented by providing a program product including program codes for implementing the method or apparatus. That is to say, the program product also belongs to the present invention, and a storage medium storing the program product also belongs to the present invention. Obviously, the storage medium may be any one of well known storage media or storage media which are to be developed.

In addition, in the apparatus or method of the present invention, units or steps may be divided and/or recombined. The division and/or recombination should be regarded as an equivalent embodiment of the present invention. Steps of the above method may be performed in time order, however the performed sequence is not limited to the time order. Any steps may be performed in parallel or independently.

The present invention is not limited to the specifically disclosed embodiments, and various modifications, combinations and replacements may be made without departing from the scope of the present invention.

## Claims

1. A method for processing a sparse disparity map based on a characteristic of a predetermined object to be detected, the method comprising the steps of:
obtaining the disparity map for detecting the predetermined object;
determining, based on the characteristic of the object in a horizontal direction in the disparity map, a distance limitation condition and a disparity difference limitation condition in the horizontal direction to be satisfied by a set of a start point and an end point for performing a filling;
determining the set of the start point and the end point for performing the filling in the horizontal direction based on the distance limitation condition and the disparity difference limitation condition in the horizontal direction, and filling empty disparity points between the start point and the end point in the horizontal direction based on the set of the start point and the end point for performing the filling in the horizontal direction, for each of rows in the horizontal direction in the disparity map;
determining, based on the characteristic of the object in a vertical direction in the disparity map, a distance limitation condition and a disparity difference limitation condition in the vertical direction to be satisfied by a set of a start point and an end point for performing a filling; and
determining the set of the start point and the end point for performing the filling in the vertical direction based on the distance limitation condition and the disparity difference limitation condition in the vertical direction, and filling empty disparity points between the start point and the end point in the vertical direction based on the set of the start point and the end point for performing the filling in the vertical direction, for each of columns in the vertical direction in the disparity map.

2. The method for processing a sparse disparity map according to claim 1, the method further comprising the step of:
performing the filling of the disparity points in the horizontal direction before performing the filling of the disparity points in the vertical direction, if the characteristic of the object in the horizontal direction is insufficient.

3. The method for processing a sparse disparity map according to claim 1, the method further comprising the step of:
performing the filling of the disparity points in the vertical direction before performing the filling of the disparity points in the horizontal direction, if the characteristic of the object in the vertical direction is insufficient.

4. The method for processing a sparse disparity map according to claim 1, the method further comprising the step of:
performing an edge detection in the vertical direction to position vertical boundaries of the object, before performing the filling of the disparity points in the horizontal direction,
wherein the filling of the disparity points in the horizontal direction is performed within the range of the vertical boundaries of the object.

5. The method for processing a sparse disparity map according to claim 1,
wherein the distance limitation condition in the vertical direction includes a condition that a vertical distance between the start point and the end point is greater than a predetermined positive number, if a non-detection object with a disparity value which gradually changes in the vertical direction exists in the disparity map.

6. The method for processing a sparse disparity map according to claim 1,
wherein in the step of determining the set of the start point and the end point for performing the filling in the horizontal and/or vertical direction, disparity points that cannot be used in the filling and have a likelihood of the background greater than a predetermined threshold are removed.

7. The method for processing a sparse disparity map according to claim 1,
wherein the empty disparity points to be filled, have a relevant confidence value, and
the more the sets of the start point and the end point that can have filled an empty disparity point exist, the greater is the relevant confidence value that is given to the empty disparity point, when the filling of the empty disparity points of one row in the horizontal direction or one column in the vertical direction is performed.

8. A method for detecting an object based on a sparse disparity map, the method comprising the steps of:
obtaining the disparity map for detecting the predetermined object;
determining, based on the characteristic of the object in a horizontal direction in the disparity map, a distance limitation condition and a disparity difference limitation condition in the horizontal direction to be satisfied by a set of a start point and an end point for performing a filling;
determining the set of the start point and the end point for performing the filling in the horizontal direction based on the distance limitation condition and the disparity difference limitation condition in the horizontal direction, and filling empty disparity points between the start point and the end point in the horizontal direction based on the set of the start point and the end point for performing the filling in the horizontal direction, for each of rows in the horizontal direction in the disparity map;
determining, based on the characteristic of the object in a vertical direction in the disparity map, a distance limitation condition and a disparity difference limitation condition in the vertical direction to be satisfied by a set of a start point and an end point for performing a filling;
determining the set of the start point and the end point for performing the filling in the vertical direction based on the distance limitation condition and the disparity difference limitation condition in the vertical direction, and filling empty disparity points between the start point and the end point in the vertical direction based on the set of the start point and the end point for performing the filling in the vertical direction, for each of columns in the vertical direction in the disparity map;
segmenting the disparity map after the filling process; and
detecting the object in the segmented regions based on the characteristic of the object.

9. An apparatus for processing a sparse disparity map based on a characteristic of a predetermined object to be detected, the apparatus comprising:
a disparity map obtainment unit configured to obtain the disparity map for detecting the predetermined object;
a horizontal direction limitation condition determination unit configured to determine, based on the characteristic of the object in a horizontal direction in the disparity map, a distance limitation condition and a disparity difference limitation condition in the horizontal direction to be satisfied by a set of a start point and an end point for performing a filling;
a horizontal direction filling unit configured to determine the set of the start point and the end point for performing the filling in the horizontal direction based on the distance limitation condition and the disparity difference limitation condition in the horizontal direction, and fill empty disparity points between the start point and the end point in the horizontal direction based on the set of the start point and the end point for performing the filling in the horizontal direction, for each of rows in the horizontal direction in the disparity map;
a vertical direction limitation condition determination unit configured to determine, based on the characteristic of the object in a vertical direction in the disparity map, a distance limitation condition and a disparity difference limitation condition in the vertical direction to be satisfied by a set of a start point and an end point for performing a filling; and
a vertical direction filling unit configured to determine the set of the start point and the end point for performing the filling in the vertical direction based on the distance limitation condition and the disparity difference limitation condition in the vertical direction, and fill empty disparity points between the start point and the end point in the vertical direction based on the set of the start point and the end point for performing the filling in the vertical direction, for each of columns in the vertical direction in the disparity map.

10. An apparatus for detecting an object based on a sparse disparity map, the apparatus comprising:
a disparity map obtainment unit configured to obtain the disparity map for detecting the predetermined object;
a horizontal direction limitation condition determination unit configured to determine, based on the characteristic of the object in a horizontal direction in the disparity map, a distance limitation condition and a disparity difference limitation condition in the horizontal direction to be satisfied by a set of a start point and an end point for performing a filling;
a horizontal direction filling unit configured to determine the set of the start point and the end point for performing the filling in the horizontal direction based on the distance limitation condition and the disparity difference limitation condition in the horizontal direction, and fill empty disparity points between the start point and the end point in the horizontal direction based on the set of the start point and the end point for performing the filling in the horizontal direction, for each of rows in the horizontal direction in the disparity map;
a vertical direction limitation condition determination unit configured to determine, based on the characteristic of the object in a vertical direction in the disparity map, a distance limitation condition and a disparity difference limitation condition in the vertical direction to be satisfied by a set of a start point and an end point for performing a filling;
a vertical direction filling unit configured to determine the set of the start point and the end point for performing the filling in the vertical direction based on the distance limitation condition and the disparity difference limitation condition in the vertical direction, and fill empty disparity points between the start point and the end point in the vertical direction based on the set of the start point and the end point for performing the filling in the vertical direction, for each of columns in the vertical direction in the disparity map;
a segmentation unit configured to segment the disparity map after the filling process; and
an object detection unit configured to detect the object in the segmented regions based on the characteristic of the object.
